# EUROPEAN PATENT APPLICATION

(11) **EP 1 116 501 A2**
(43) Date of publication of application: **18.07.2001**
(21) Application number: 00124717.0
(22) Date of filing: 13.11.2000
(51) Int. Cl.: A63B 37/12, A63B 45/00, B29D 31/00, C08L 75/04

(54) **Method for coating golf balls with a dry-on-line clear polyurethane composition**

(30) Priority: 14.12.1999 US 170684 P
(71) Applicant: Dunlop Slazenger Group Americas Inc, Greenville, SC 29607 (US)
(72) Inventor: Cao, Feng, Central, SC 29630 (US); Wallace, George R., Clemson, SC 29631 (US)
(74) Representative: Torggler, Paul Norbert, Dr.

(57) **Abstract**

An improved clear polyurethane coating for a golf ball comprises a coating that dries on-line at elevated temperatures in 10 minutes and without assistance of a plural machine; a method for coating golf balls with the fast-drying coating system. The coating system provides improved flight characteristics to the golf balls.

## Description

### Background of the Invention

### (1) Field of the Invention

This invention relates generally to golf balls and golf ball coatings. More particularly, the present invention relates to golf balls having an improved polyurethane clear top coating that dries on-line without assistance of a plural machine, and to a method of coating a golf ball with a dry-on-line clear polyurethane. The coating system of this invention is particularly suitable for golf balls having a cover comprising an ionomer resin.

### (2) Description of Related Art

A golf ball is generally classified into one of three types: a golf ball having a balata or urethane cover; a golf ball with a cover mainly composed of an ionomer resin; and an integrally molded type one-piece golf ball. All three of these golf balls are normally treated in order to impart a white appearance thereto, making the golf balls more visible against green grass.

Golf balls can also be classified according to the method of their assembly as either a "three-piece," a "two-piece" or a "one-piece" construction. The assembly of a golf ball generally involves molding a cover around a solid or wound core. Golf balls with wound cores are typically referred to as "three piece balls " because they consist of three basic components: (1) a solid or liquid-filled center; (2) rubber windings around the center; and (3) the cover.

Similarly, solid cores are referred to as having a "two piece" construction, since they consist solely of a solid core and a cover. A third type of ball, known as a "one-piece" ball is also known in the art. As the name suggests, one-piece balls are solid balls of homogeneous construction made by any conventional molding method suitable for the purpose.

The composition of the golf ball cover has proven to be a factor in overall golf ball performance. Historically, three-piece balls had covers made of balata. Balata is a natural resin, essentially made up of transpolyisoprene, and obtained from trees in South and Central America. Urethane covers are made from diisocyanates and polyols. Both a golf ball having a balata or urethane cover and an integrally molded type one-piece golf ball are coated with a paint containing a large amount of white pigment.

The majority of modern golf balls use a two-piece or three-piece construction with covers made of an ionomer resin such as Surlyn®, a product of E.I. DuPont de Nemours Company, Incorporated. An ionomeric resin is a polymer with covalent bonds between the elements of the chain, and ionic bonds between the chains. The Surlyn® covers are more cut-resistant than the balata covers.

In the case of a golf ball with a cover mainly composed of an ionomer resin, the ionomer resin itself is transparent, and the white pigment can also be formulated in the ionomer resin itself. Therefore, a white appearance can sometimes be obtained by only providing a clear layer without using the white paint.

There is a need for an improved clear polyurethane coating that will adhere well after weathering and that will resist abrasion. Good adhesion of the polyurethane coating after weathering and resistance of the coating to abrasion are particularly important for driving range balls, often referred to as "range balls." Because range balls are used in all kinds of weather, over and over again for many years, they need a tough and durable outer coating.

The durability and mechanical strength of an outer coating depend primarily on the chemical structure of the coating, the mechanical nature of the coating, and the thickness of the coating. The chemical bonds in polyurethane are very strong. However the mechanical strength of the coating depends largely on the presence of an optimal length of urethane chain and an optimal density of crosslinkages. Two factors control chain length and density of crosslinkages. One such factor is the ratio of polyols and isocyanates used. The other factor is curing time. Generally, a longer curing time tends to provide better film mechanical properties of a urethane coating. Because mechanical strength is particularly important in range ball coatings, prior art polyurethane coatings used in the manufacture of range balls generally require approximately a 16 hour baking process in order to attain a durable urethane coating.

The durability of the urethane coating also depends on the thickness of the coating. Conventional practice is to either build up a thick coating of urethane through multiple spray applications of low-solid coatings or to apply a single layer of high solids coating. From a productivity standpoint, a single pass spray with high solids is more economical. However, a high-solid, single-pass spray presents technical difficulties. One disadvantage of a conventional single-pass spray process is that the material to be sprayed is very viscous and therefore difficult to spray. Another disadvantage of a conventional single-pass spray is that the thick layer produced dries slowly and tends to sag, causing a non-uniform thickness of coat. The resultant ball is not uniformly spherical, and therefore exhibits poor flying performance.

Typical paints used to coat golf balls, including urethane golf balls, comprise two component polyurethane coatings, which have good impact resistance. One of the problems associated with conventional two component polyurethane coatings is that they dry slowly. In order to speed up drying, a plural machine is usually used.

Because of the slow drying nature of conventional polyurethane coatings, the golf ball painting process requires many steps. In the conventional process for clear-coating a golf ball, the surface-prepared balls are first mechanically loaded onto a stamping machine that prints a logo or stamp on the balls. The balls are then continuously loaded onto spindles that carry the balls and travel along with a moving chain to pass by spray guns that apply a clear polyurethane top-coating to the balls. The chain then moves wet, painted balls through a heated oven to pre-cure the coating. When they reach the end of the oven, the painted balls are usually still not dry, and have to be manually unloaded from spindles on the moving chain onto holding racks. The holding racks with the balls are then placed into another heated oven to bake for another 16 hours or longer at 100 degrees Fahrenheit in order to completely cure the coating before further processing or handling. Due to the slow-drying nature of a conventional clear coat polyurethane system, all these steps, especially the 16 hour baking process, are necessary.

The conventional painting process has many drawbacks. First, manually loading wet balls from spindles on a moving chain on to holding racks is very labor intensive and often results in damage or destruction of the surface of the balls. Due to human error, many well-painted balls are often accidentally dropped off from spindles on a moving chain line or off holding racks. The dropped balls are unusable and represent substantial annual capital loss.

Secondly, there is a substantial labor cost to unload cured balls from the racks into collecting hoppers for further processing. Thirdly, oven baking for 16 hours is time-consuming and consumes a substantial amount of energy. The ovens are large and require a large amount of floor space, which is also costly. The number of steps reduces productivity substantially.

In addition, an inevitable, substantial problem is that unloading wet balls off spindles onto loading racks often leaves balls with scratches or pin marks because the balls with wet paint have to be touched by another device. These scratches or marks are major causes of quality control rejection for surface defects.

An even greater problem is that the heating of the balls for the required drying time in the ovens deteriorates the rubber thread wound inside urethane balls. The performance of urethane balls depends substantially on the elasticity of the rubber thread wound inside the balls. The rubber thread windings have been analogized to an "engine" of a wound ball. The deterioration by heat is due to the associated loss of elasticity of rubber thread wound inside wound balls, and the resulting loss of performance.

Fast drying of the applied coating and long "pot life" of the urethane coating materials are both properties desired by painters working with urethane coatings. However, the fast drying and long pot life are properties that contradict each other. That is, the faster drying a formula is, generally the shorter the pot life is. To compromise, common practice in the industry is to use a so-called "plural component machine" or simply "plural machine" which mixes component A with component B containing a catalyst just before the coating reaches the spray gun. This approach satisfies the painter's need to have a long pot life because components A and B are separated until the coating material reaches the spray gun. However, the plural machine is very expensive and one machine can serve only one paint line. If a shop has many paint lines, the capital investment is substantial.

For the foregoing reasons, there is a need for an improved clear polyurethane coating for golf balls which can be applied in a single spray, and which will dry quickly on-line without requiring oven-baking and for a method for coating a golf ball with the improved, fast-drying, single spray polyurethane.

### Summary of the Invention

The present invention satisfies these needs with a clear polyurethane coating for golf balls that dries on-line in approximately 10 minutes without assistance of any plural machine, a coating that can be applied in a single spray, that dries without sagging and that is tough and durable, and with a method for coating golf balls that comprises using the coating composition and the coating system of the invention.

Accordingly, the main object of the invention is to provide an improved clear polyurethane coating for golf balls that dries quickly on-line, and a method for applying the improved coating.

A further object of the invention is to provide a fast-drying, clear polyurethane coating that can be applied in a single spray, is uniform in thickness, and imparts a shiny, smooth surface to golf balls.

Another object of the invention is to provide a fast-drying, clear polyurethane coating and a method for applying the coating that produce golf balls that are free of surface defects caused by wet balls being touched by another device.

Another object of the invention is to provide a fast-drying, clear polyurethane coating that has good impact resistance and that is suitable to paint golf balls having ionomeric resin covers.

Another object of the invention is to provide a simple formulation using a catalyst system that causes the coating to dry in a period of approximately 10 minutes and yet has good pot life and a constant viscosity over the course of that pot life.

Yet a further object of the invention is to eliminate the need for manually loading and unloading wet balls from spindles on a moving chain onto holding racks. By eliminating the need for manual loading and unloading, labor cost is reduced and the number of balls dropped and damaged during handling is substantially reduced.

Another object of the invention is to eliminate the need for a second oven-baking of wetcoated balls before further handling or processing. By eliminating the need for the second oven-baking, which in the conventional method is carried out at a high temperature for 16 hours, energy and floor space costs are significantly reduced and loss of performance of balls due to heat deterioration of interior rubber windings is eliminated.

Another object of the invention is to provide an improved coating system and method for coating golf balls that allow the coated balls to be collected into containers directly from the painting line to be further processed .

The foregoing and other objects of the invention have been attained by providing a clear polyurethane coating for golf balls and a coating system that uses a drying accelerator which is part of the present invention. The drying accelerator substantially shortens the drying time of the clear polyurethane coating. In addition, the combination of catalysts used in the drying accelerator results in a viscosity that is more constant than that provided by a single catalyst used in conventional systems. In conventional single catalyst systems there is a need to continually adjust the focus and air pressure of the spray guns due to rapidly changing viscosity.

The accelerator is comprised of two metal catalysts which have a synergistic effect on the drying of the polyurethane coating. It is critical that both catalysts are used together, because if only one of the catalysts is used, the effect on drying time is substantially less. One of the catalysts comprises a chelated zirconium complex, available commercially as K-Kat 4205. The other catalyst, which works in synergism with the zirconium catalyst is dibutyl tin di-laurate (DBTDL), commercially available as Metacure T-12. This combination imparts novel fast drying characteristics to the coating so that it dries on-line in a period of 10 minutes at temperatures of 170 to 180°F, yet has reasonable pot life. The pot life is over 2 hours. This desirable balance between fast drying characteristics and adequate pot life satisfies a long felt need in the industry, and would not be obtained by using either of the catalysts separately.

The coating system also uses a surfactant to improve flow properties of the coating material to be sprayed and to impart a shiny, smooth surface to the coated balls. This is important in golf ball coatings because of the dimples on the surface of golf balls. If the coating material to be sprayed on the balls has poor flow characteristics, the coating material will flood the dimples. The result will be uneven coating of the dimples. Because the dimples control the overall flying performance of the balls, the uneven coating will adversely affect the flying performance of the balls. In this invention, a fluorosurfactant containing fluoroaliphatic polymeric esters in ethyl acetate is used. The fluorosurfactant is commercially available as Fluorad-431. Other surfactants would also work. Fluorad-431 is preferred.

The paint system in this invention comprises a polyurethane coating mixture, a two-component drying accelerator, and a surfactant. The unique drying accelerator and the surfactant were briefly described above. The polyurethane coating system is a conventional system comprising polyols, isocyanates, and solvents. The coating system of this invention, including the unique drying accelerator and the fluorosurfactant, provides a coating with good impact resistance, good adhesion, flexibility, abrasion resistance, and toughness. These are necessary characteristics of a coating system for golf balls, especially for range balls. The system would be extremely slow-drying but for the unique two-component catalyst of the invention.

Thus the dry-on-line clear polyurethane coating for golf balls and the golf ball coating method of the present invention provide a substantially faster manufacturing process with much less heat exposure and a much greater percentage of goif balls produced without surface defects than in conventional golf ball coating systems. The result is a substantial capital savings for the manufacturer and better performing balls due to less heat exposure in the coating process than in conventional systems. The painted golf balls produced in accordance with this invention have significantly improved flying accuracy.

### Brief Description of the Drawings.

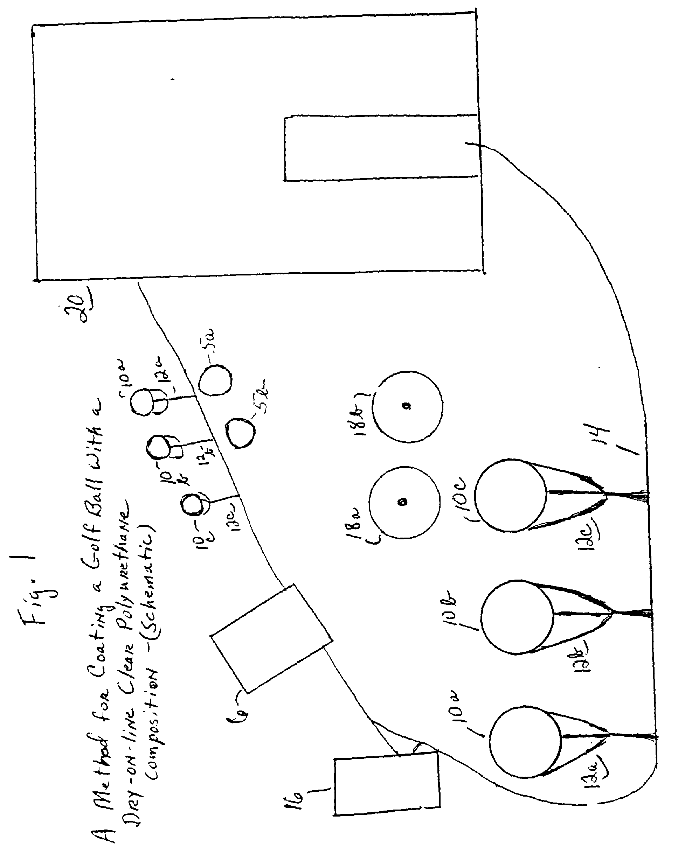

Figure 1 depicts a side elevation view of an embodiment of a schematic procedure for spraying golf balls with a Dry-On-Line Clear Polyurethane Composition.

### Description of the Preferred Embodiments

At the outset the invention is described in its broadest overall aspects with a more detailed description following. The fast-drying property of the paint system in this invention revolutionizes the whole painting process into so-called dry-on-line. The present invention is a clear polyurethane coating system suitable for golf balls that dries on-line in a period of approximately 10 minutes under elevated temperature. Thus the painted balls can be dried on-line and mechanically transferred for further processing.

The method of this invention is performed as follows: Golf balls having a pigment such as white, yellow, or any other color mixed into the golf ball cover are provided. For proper coating adhesion, the surfaces of the balls are prepared by conventional methods, including removal of dirt and grease from tne surface. In addition, the surfaces are "roughened" to increase surface area. The surface-prepared balls are mechanically loaded onto a stamping machine by which logos or stamps are printed.

As shown in Fig. 1, the golf balls 10a, lOb, lOc are loaded onto spindles 12a, 12b, 12c, on a chain 14. The chain is moved by ? drive system 16. The chain moves and carries the balls past a first set of spray guns 5a. 5b, that apply one coat of a conventional primer paint to the balls. The primer paint comprises aziridine and an acrylic-urethane emulsion in water and other solvents. The chain moves the balls into a first oven 6 where they are heated for about one to two minutes. The clear coating is applied immediately after the balls exit the first oven. To apply the clear coating, the balls are carried by the chain past a second set of spray guns 18a, 18b. The balls 10a, 10b, 10c are sprayed with the clear polyurethane coating composition of this invention, and are moved along with the chain 14 into a heated oven 20. The chain travels in the oven 20 for a period of 10 to 15 minutes. When the balls exit the oven after the 10 to 15 minute period, they are sufficiently dry to allow them to be mechanically knocked off directly from spindles into collecting hoppers for further processing.

Thus, the coating system of this invention eliminates the steps of manually loading wet, clear-coated balls; it eliminates 16 hours of drying time for the clear coat in a second oven; the need for a second oven; and manually unloading cured balls into collecting hoppers. Furthermore, the dry-on-line process reduces quality rejection due to reduction in the number of balls with surface defects. The dry-on-line process also maintains wound ball performance as designed because the process requires significantly less exposure to high heat than conventional systems. Flight performance is also improved because of even-coating of the dimples resulting from the single-spray, high solid, low viscosity, fast-drying nature of the coating system of this invention.

The coating system in this invention comprises a polyurethane clear coating mixture, a drying accelerator and a surfactant. The coating mixture that has a component of polyester polyols, of isocyanates, and of solvents is supplied by Technical Coating Laboratory, Inc., hereinafter referred to as "TCL," in Avon, Connecticut. The polyurethane clear coating mixture is a clear base, commercially available as TCL 6249, comprising polyester polyols.

The ingredients of TCL 6249 include the following:

| Component | Weight percent (approximate) |
|---|---|
| Propylene glycol monomethyl ether acetate | 2 |
| Xylene | 1 |
| N-butyl acetate | 14 |
| Ethyl acetate | 16 |
| Toluene | 26 |
| Cyclohexanone | < 0.5% |
| Mineral spirits | < 0.5% |
| Ethyl benzene | < 0.5% |
| Non-volatiles | 40.9 |

The clear base, TCL 6249, is mixed with the activator, commercially available as TCL 6263, comprising a blend of aliphatic and aromatic isocyanates.

The ingredients of TCL 6263 include the following:

| Component | Weight percent (approximate) |
|---|---|
| Hexamethylene diisocyanate | 1 |
| Xylene | 11 |
| N-butyl acetate | 17 |
| Toluene | 8 |
| Non-volatiles | 64.1 |

The fluorosurfactant used in this invention, as previously stated, contains fluoroaliphatic polymeric esters in ethyl acetate, and is commercially available as Fluorad-431.

The ingredients of Fluorad-431 include the following:

| Component | Weight percent (approximate) |
|---|---|
| Potassium fluoroalkyl carboxylate(C8) | 40.0 to 44.0 |
| Water | 32.0 |
| 2-Butoxyethanol | 14.0 |
| Ethyl alcohol | 4.0 |
| Potassium fluoroalkyl carboxylate(C6) | 1.0 to 5.0 |
| Potassium fluoroalkyl carboxylate(C4) | 1.0 to 5.0 |
| Potassium fluoroalkyl carboxylate(C7) | 1.0 to 3.0 |
| Potassium fluoroalkyl carboxylate(C5) | 0.1 to 1.0 |

It is known that reactions of polyols with isocyanates forming polyurethane linkage follow a nucleophilic reaction mechanism. The reaction starts with a lone pair of electrons of oxygen in a hydroxy group of polyols first attacking a carbonyl carbon of an isocyanate group. The reaction speed will be greatly increased if any dissociation of hydrogen in a hydroxy group of polyols occurs since it empowers nucleophilic attack of oxygen due to increase of its electron density.

It is known that chelated zirconium such as K-Kat 4205 catalyzes the curing of 2component urethane coatings. It is also known that dibutyl tin dilaurate (DBTDL) catalyzes the curing of polyurethane. However, the invention is directed to the combining of the two catalysts, chelated zirconium and DBTDL, which the inventors discovered has a dramatic, synergistic effect on both curing time and the uniformity of coating and on the flying accuracy of a golf ball coated with the coating system of the invention.

As described previously, one of the catalysts comprises a chelated zirconium complex, available commercially from King Industry as K-Kat 4205. The amount of K-Kat 4205 used in the present invention is 1.2% on resin solid. If it were the only catalyst present in the coating mixture, the Zirconium complex in K-Kat 4205 is believed to act as a Lewis acid interacting with the hydrogen in a hydroxy group of a polyol. Thus, the nucleophilic attacking power of the oxygen in a hydroxy group is greatly increased. As a result of the foregoing mechanism, the drying of the polyurethane coating speeds up.

In order to provide a coating system which dries quickly on-line, it is critical that the polyurethane coating mixture includes a drying accelerator comprising two catalysts, a chelated zirconium complex and dibutyl tin dilaurate, which act in synergism with one another to greatly speed drying time. The mechanism for the synergism of the two catalysts is unknown.

The following examples are illustrative for mixing procedure and application conditions of the coating system of the invention. The examples are provided for illustration but are not to be considered as limiting.

### Example 1

### Preparation of Catalyst Solution

For optimal results, the catalyst solution should be freshly prepared. Into a container, add 10.0 grams of K-Kat 4205 and 0.3 grams Metacure T-12. Stir until the two catalysts are well mixed, forming "Mixture 1."

To prepare the catalyst solution, into a second container, add 4.7 grams of the Mixture 1. Then add the following into the second container: 10.0 grams of FC-431, 32.0 grams of parachlorobenzotrifluoride (PCBTF), and 32.0 grams of acetone. PCBTF is commercially available as Oxsol-100, supplied by Oxychem. Mix the ingredients present in the second container well. The catalyst solution in the second container is ready to use as soon as it is well-mixed. The total amount of the two component catalyst system is 78.7 grams. The catalyst solution should be kept covered as long as possible to minimize loss of solvent by evaporation.

### Example 2

| Preparation of Urethane Clear Coat | | | |
|---|---|---|---|
| Ingredients | Code | Solid %w/w | Amount |
| Clear base | TCL 6249 | 40.90 | 550.0 grams |
| Activator | TCL 6263 | 64.10 | 290.0 grams |
| Catalyst solution | | 0.00 | 78.7 grams |
| Total | | | 918.7 grams |

Example 2 illustrates the preparation of a clear coating system which is used to coat golf balls, particularly range balls. The ingredients in the above table are mixed according to the following procedure.

At room temperature, the following materials are added to a container: 550.0 grams of clear base TCL 6249, 290.0 grams of activator TCL 6263 and 78.7 grams of catalyst solution from Example 1. The container is put on a shaker to shake for 5 minutes. The clear coating mixture is ready to spray golf balls.

In the above table for Example 2, the critical ratio of coating components is 550.0 grams of TCL 6249 to 290.0 grams of TCL 6263. The preferred range is plus or minus 10% from the critical ratio. The catalyst will work with any ratio of polyols and isocyanates.

### Example 3

### Method of Applyine a Clear Urethane Coating Mixture

Provide a freshly-prepared catalyst mixture prepared according to Example 1, and a urethane clear coat mixture prepared according to Example 2. Provide golf balls having a pigment such as white, yellow, or any other color mixed into the golf ball cover. Prepare the surface of the golf balls by removing dirt and grease. Roughen the surface of the golf balls. Mechanically load the surface-prepared balls onto a stamping machine by which logos o1 stamps are printed. Apply one coat of a conventional primer paint to the golf balls. This is done on-line, prior to the application of clear coat. As shown in Fig. 1, load the golf balls 10a, lOb, lOc onto spindles 12a, 12b, 12c on a chain 14. Connect the chain to a drive system 16 which moves the chain and carries the balls past a first set of spray guns 5a, 5b that apply one coat of a conventional primer paint to the balls. Move the balls on-line into a first oven 6 and allow them to be heated for about ore to two minutes. When the balls exit the oven continue to move them past a second set of spray guns 18a, 18b to be sprayed with clear coating while the balls are still warm. Adjust the spray guns and chain speed to control the total weight of wet clear paint on a ball to between 200.0 and 210.0 mg. Adjust the chain speed of the painting line to 23.0 ft./min. (equivalent to painting 130 balls per minute).

The chain 14 moves and carries the balls 10a, 10b, 10c past spray guns 18a, 18b. The balls 10a, 10b, 10c are sprayed with the clear polyurethane coating composition of this invention, and are moved along with the chain 14 into a heated oven 20. The oven temperature is at 180° Fahrenheit. Allow the chain to travel in the oven 20 for a period of 10 to 15 minutes. When the balls exit the oven after the 10 to 15 minute period, they are sufficiently dry to allow them to be mechanically knocked off directly from spindles into collecting hoppers for further processing.

In this example, only one coat of polyurethane coating is applied. The polyurethane coating is "high solids," containing more than 40% solids, but is applied in a single-pass spray. This is unlike conventional single-pass spray coating systems, in which the high solid spray is too viscous for even coating. The viscosity of the high solid spray of the present invention is sufficiently low to make spraying easy. The clear coating is uniformly thick and the coated ball exhibits excellent flying characteristics.

Contrary to the "plural component machine" approach, the invention provides a balance between drying speed and pot life of urethane coatings. The composition of the invention dries in a period of 10 minutes at a temperature of about 180 Fahrenheit, yet still has a pot life of over 2 hours. This balance not only meets a fast drying requirement, but also offers reasonable pot life to painters. Coating properties of the invention are excellent.

This polyurethane coating has good adhesion, flexibility, abrasion resistance and toughness. However, without the critical combination of catalysts to which the present invention is directed, the coating would dry slowly and require all the steps of conventional systems described previously.

While the present invention has been described in connection with preferred embodiments thereof, it will be apparent to those skilled in the art that many changes and modifications may be made without departing from the true spirit and scope of the present invention. Accordingly, it is intended by the appended claims to cover all such changes and modifications as come within the true spirit and scope of the invention.

## Claims

1. A golf ball, said golf ball having on its outer surface a clear polyurethane coating that is formed from a mixture comprising a surfactant, a base, and a drying accelerator further comprising at least two metal catalysts.

2. The golf ball of claim 1 wherein the drying accelerator comprises a catalyst containing zirconium.

3. The golf ball of claim 1 wherein the drying accelerator comprises a catalyst containing dibutyl tin dilaurate.

4. A composition suitable for coating a golf ball with a clear polyurethane coating comprising a surfactant, a base, and a drying accelerator further comprising at least two metal catalysts.

5. A composition according to claim 4 wherein the drying accelerator comprises a catalyst containing zirconium.

6. A composition according to claim 4 wherein the drying accelerator comprises a catalyst containing dibutyl tin dilaurate.

7. A method for coating a golf ball with a clear polyurethane coating comprising the steps of:
(i) providing a golf ball that is capable of being coated with a clear polyurethane coating;
(ii) spraying the ball with a clear polyurethane coating mixture according to claims 4, 5, or 6.
(iii) moving the ball into a heated oven;
(iv) allowing the ball to remain in the heated oven for a period of time sufficient to dry the coating.

8. The method according to claim 7 wherein the golf ball is placed on a spindle on a chain that carries the golf ball past paint spray guns, and after being sprayed, the ball is moved along on the chain into a heated oven.
